# EUROPEAN PATENT SPECIFICATION

(11) **EP 1 923 238 B1**
(45) Date of publication and mention of the grant of the patent: **13.06.2012**
(21) Application number: 06797518.5
(22) Date of filing: 06.09.2006
(51) Int. Cl.: B60C 25/00, B60C 17/06, B60C 17/04

(54) **METHOD AND DEVICE FOR FIXING RUN FLAT SUPPORT BODY TO PNEUMATIC TIRE**
VERFAHREN UND VORRICHTUNG ZUR BEFESTIGUNG EINES NOTLAUFSTÜTZKÖRPERS AN EINEM LUFTREIFEN
PROCÉDÉ ET DISPOSITIF DE FIXATION DE CORPS DE SUPPORT À FLANCS RENFORCÉS À UN PNEU

(30) Priority: 07.09.2005 JP 2005259234
(43) Date of publication of application: 21.05.2008
(73) Proprietor: THE YOKOHAMA RUBBER CO., LTD., Tokyo 105-8685 (JP)
(72) Inventor: NAITO, Mitsuru, Hiratsuka-shi, Kanagawa 254-8601 (JP)
(74) Representative: HOFFMANN EITLE
(86) International application number: PCT/JP2006/317622
(87) International publication number: WO 2007/029725

(56) References cited:
- EP-A2- 1 314 583
- JP-A- 2001 163 020
- JP-A- 2003 048 410
- JP-A- 2004 058 833
- JP-A- 2006 082 587
- US-A1- 2005 161 139
- US-A1- 2005 178 486
- US-B1- 6 463 974

## Description

### TECHNICAL FIELD

The present invention relates to a method for fixing a run-flat support body to a pneumatic tire, and relates to a device used for the method. More specifically, the present invention relates to a method and a device for fixing a run-flat support body to a pneumatic tire, which can achieve the prevention of unevenness in the distribution of the lubricant applied to the inner surface of the tire in which the run-flat support body is used, and thus of deterioration in the weight balance of a wheel.

### BACKGROUND

In response to demands from the market, a variety of proposals have been made for techniques which enable vehicles to make an emergency run some distance even when one of their pneumatic tires goes flat while running. Some of these various proposals relate to a technique in which an inner ring is fitted to the rim in the hollow part of the pneumatic tire. According to the technique, when the tire goes flat, the inner ring supports the flat tire and allows the tire to run flat (see Japanese patent application Kohyo publication No. 2001-519279; Japanese patent application Kokai publication No. 2001-163020; and Japanese patent application Kokai publication No. Hei. 10-297226 for example).

A run-flat support body of this type includes an annular shell and elastic rings. The annular shell has a straddle structure formed of an abutment part and leg parts. The abutment part is designed to abut on the inner surface of the tire and protrudes toward the outer periphery of the tire. The leg parts extend along the two sides of the abutment part. The elastic rings are attached to the respective leg parts of the annular shell. The run-flat support body is designed to be mounted on the rim with the elastic rings placed in between. Such run-flat support bodies are disclosed in EP 1 314 583 A2. Run-flat support bodies of this type can be applied to wheels and rims of existing types, and do not require any modification to the wheels or the rims. Accordingly the run-flat support bodies of this type have an advantage of being able to be accepted by the market without creating any confusion in the market. Reference is also made to US 2005/161139 A1 and US 2005/178486 A1.

In a case where a run-flat support body of the foregoing type is used, a lubricant needs to be applied to the inner surface of the pneumatic tire for the purpose of reducing frictional resistance between the annular shell and the tire while the tire runs flat. This type of lubricant is applied to the inner surface of the pneumatic tire before the run-flat support body is inserted in the hollow part of the tire.

However, the run-flat support body inserted into the hollow part may move radially to move to the inner surface of the pneumatic tire while the pneumatic tire is being transported, and this move can make the lubricant applied to the inner surface of tire unevenly distributed. This uneven distribution of the lubricant makes the wheel out of weight balance after the tire is fitted to the rim.

### SUMMARY OF THE INVENTION

An advantage of embodiments of the present invention is to provide a method and a device for fixing a run-flat support body to a pneumatic tire. The method and the device can achieve the prevention of unevenness in the distribution of the lubricant applied to the inner surface of the tire in which the run-flat support body is used, and thus of deterioration in the weight balance of the wheel.

According to a first aspect of the present invention, there is provided a method as recited in Claim 1 below.

According to a second aspect of the present invention, there is provided a fixing device as recited in Claim 2 below.

According to a third aspect of the present invention, there is provided a fixing device as recited in Claim 3 below.

According to a fourth aspect of the present invention, there is provided a fixing device as recited in Claim 4 below.

In embodiments of the present invention, in using the run-flat support body which, along with the pneumatic tire, is fitted to the rim with being inserted into the hollow part of the pneumatic tire, the fixing device, for restricting a radial movement of the run-flat support body inserted into the hollow part, is fitted to at least one of the bead parts of the pneumatic tire before the pneumatic tire is fitted to the rim, and the pneumatic tire and the run-flat support body are coaxially held by the fixing device. This makes it possible to securely prevent the run-flat support body inserted into the hollow part from moving in any radial direction, and thus from contacting the inner surface of the pneumatic tire, while the pneumatic tire is being transported. Accordingly even though a lubricant is applied to the inner surface of the tire for the purpose of reducing, while the tire runs flat, frictional resistance between the annular shell and the pneumatic tire, the layers of the lubricant are prevented from being disarranged through the moving of the run-flat support body, and thus the wheel is prevented from being out of weight balance after the tire is fitted to the rim.

The following (1) to (3) can be used as the above-described fixing device used in the method for fixing the run-flat support body and the pneumatic tire to each other.

(1) A fixing device includes: multiple clamp parts for clamping together one of the bead parts of the pneumatic tire and one of the elastic rings of the run-flat support body at multiple points on the circumference of the bead part and the elastic ring; and an extending part for allowing the multiple clamp parts to extend radially outward of the pneumatic tire.

(2) A fixing device includes: a clamp part for clamping together one of the bead parts of the pneumatic tire and one of the elastic rings of the run-flat support body at an arbitrary point on the circumference of the bead part and the elastic ring; and a locking part which is locked to a tread part of the pneumatic tire in a manner that the clamp part is pulled up radially outward of the pneumatic tire.

(3) A fixing device includes: an insertion part which is inserted radially inward into one of the bead parts of the pneumatic tire, and which thus abuts on this bead part and one of the elastic rings of the run-flat support body; and a flange part attached to the insertion part.

Use of these fixing devices makes it possible to simply and quickly perform the process of fixing the pneumatic tire and the run-flat support body to each other.

### BRIEF DESCRIPTION OF THE DRAWINGS

Fig. 1 is a perspective view showing a fixing device for carrying out a method of fixing a run-flat support body and a pneumatic tire to each other according to an exemplary embodiment of the present invention.
Fig. 2 is a cross-sectional view of a tire taken along a tire meridian, which shows the fixing device of Fig. 1.
Fig. 3 is a perspective view of showing a fixing device for carrying out a method of fixing a run-flat support body and a pneumatic tire to each other according to another exemplary embodiment of the present invention.
Fig. 4 is a cross-sectional view of a tire taken along a tire meridian, which shows the fixing device of Fig. 3.
Fig. 5 is a perspective view of showing a fixing device for carrying out a method of fixing a run-flat support body and a pneumatic tire to each other according to yet another exemplary embodiment of the present invention.
Figs. 6(a) to 6(c) show various structures which are employed for the fixing device of Fig. 5, and Figs. 6 (a) to 6 (c) are plan views of the respective structures.

### DETAILED DESCRIPTION

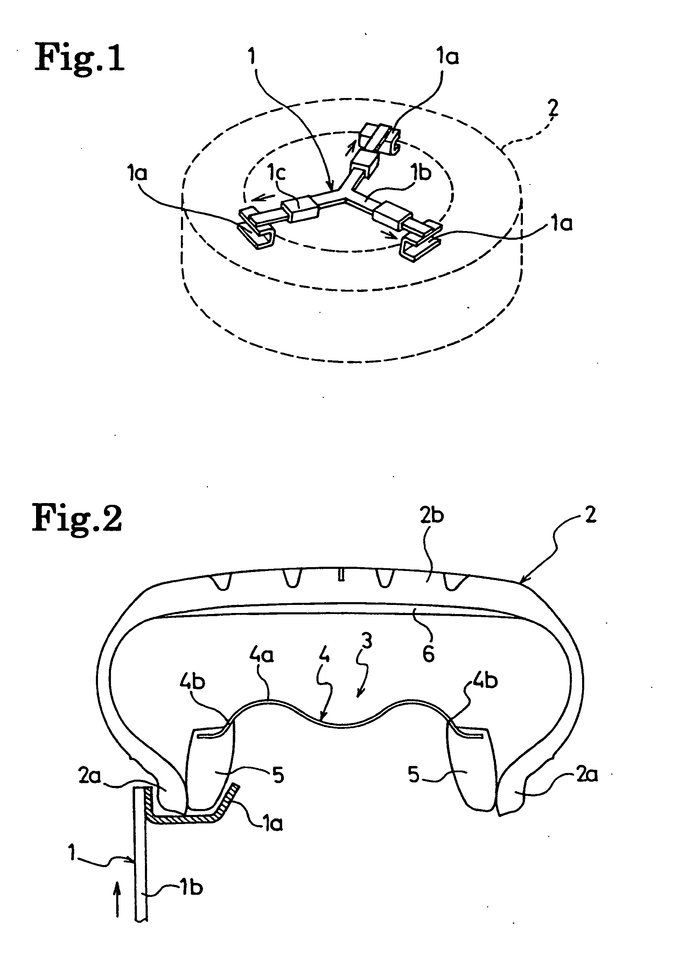

Hereinafter a detailed description will be given of exemplary configurations of the present invention with reference to the accompanying drawings. Figs. 1 and 2 show a fixing device for carrying out a method of fixing a run-flat support body to a pneumatic tire according to an exemplary embodiment of the present invention. In Figs. 1 and 2, reference numeral 1 denotes a fixing device; 2, a pneumatic tire; and 3, a run-flat support body.

The run-flat support body 3 is configured of an annular shell 4 and elastic rings 5 as the chief parts thereof. This run-flat support body 3 is separated away from the inner surface of the pneumatic tire 2 while the pneumatic tire is making a normal run. When the pneumatic tire 2 goes flat, however, the run-flat support body 3 supports the flat pneumatic tire 2 from the inside of the tire.

The annular shell has a straddle structure formed of an abutment part 4a and leg parts 4b and 4b. The abutment part is designed to abut on the inner surface of the tire when the tire goes flat and protrudes toward the outer periphery (radially outward) of the tire. The leg parts extend 4b and 4b along the two sides of the abutment part 4a. The abutment part 4a of the annular shell 4 is formed in a way that, when taken along the cross-section orthogonal to the circumferential direction of the annular shell 4, the outer surface of the abutment part 4a presents a convex curve toward the outer periphery. At least one convex curve is needed to serve the purpose. It is desirable, however, that two or more convex curves should be arranged in a line along the axial direction of the tire. If the abutment part 4a of the annular shell 4 is formed in a way that two or more convex curves are arranged in a line, the abutment part 4a is allowed to contact the inner surface of the tire at two or more locations, and accordingly reduces local wear on the inner surface of the tire caused by the convex curves. This makes it possible to extend the distance at which the tire continues running flat.

The annular shell 4 is as thin as 0.5 mm to 5.0 mm, and is made of a highly rigid material in order to support the weight of the vehicle from the inside of the pneumatic tire 2 when the tire is flat. A metal and a resin can be used as the component material of the annular shell 4. The component material may be a metal such as steel, aluminum and the like, for example. On the other hand, when the material is a resin, the component material may be either a thermoplastic resin or a thermosetting resin. The thermoplastic resin used here may be nylon, polyester, polyethylene, polypropylene, polyphenylene sulfide, ABS, or the like. The thermosetting resin used here may be an epoxy resin, an unsaturated polyester resin, or the like. The resin may be used solely, or in combination with reinforcement fibers as a fiber-reinforced resin.

The elastic rings 5 are attached to the respective leg parts 4b and 4b of the annular shell 4, and are designed to support the annular shell 4 while abutting on the respective rim sheets arranged on the right and left sides of the rim. These elastic rings 5 ease the impact and vibration which the annular shell 4 receives from the pneumatic tire 2 when the tire goes flat, and stably support the annular shell 4 while preventing the annular shell 4 from slipping on the rim sheets.

A rubber and a resin can be used as the component material for the elastic rings 5. Particular, a rubber is desirable as the component material. The rubber used here may be natural rubber (NR), isoprene rubber (IR), styrene-butadiene rubber (SBR), butadiene rubber (BR), hydroegenated NBR, hydrogenated SBR, ethylene propylene rubbers (EPDM, EPM), butyl rubber (IIR), acrylic rubber (ACM), chloroprene rubber (CR), silicon rubber, fluoro rubber, or the like. As a matter of course, additives such as a filler, a curing agent, a rubber accelerator, a softener and an age resistor can be mixed with the rubber as appropriate. A desirable elasticity modulus can be obtained on the basis of compounding ratio of the rubber composition.

In a case where the run-flat support body 3 thus configured is inserted into the hollow part of the pneumatic tire 2, when the pneumatic tire 2 goes flat while running, the flat pneumatic tire 2 is supported by the run-flat support body 3. This enables the pneumatic tire to run flat. For the purpose of reducing frictional resistance between the annular shell 4 and the pneumatic tire 2 while the tire runs flat, a lubricant 6 is applied to the inner surface of the tire in a layered manner. This lubricant 6 is applied to the inner surface of the pneumatic tire 2 before the run-flat support body 3 is inserted into the hollow part of the tire.

The pneumatic tire 2 before the pneumatic tire is fitted to the rim is sometimes transported with a run-flat support body 3 included therein. In this case, if the run-flat support body 3 can move freely in any radial direction within the hollow part of the pneumatic tire 2, the run-flat support body 3 moves to the inner surface of the pneumatic tire so that the lubricant 6 is made unevenly distributed. This uneven distribution of the lubricant 6 makes the wheel out of weight balance after the pneumatic tire 2 is fitted to the rim.

With this taken into consideration, as shown in Figs. 1 and 2, the fixing device 1, for restricting the radial movements of the run-flat support body 3 inserted into the hollow part of the pneumatic tire 2, is fitted to at least one of the bead parts 2a of the pneumatic tire 2 before the pneumatic tire 2 is fitted to the rim. Thus, the pneumatic tire 2 and the run-flat support body 3 are coaxially held by the fixing device 1.

The fixing device 1 includes multiple clamp parts 1a and an extending part 1b. The clamp parts 1a clamp together one of the bead parts 2a of the pneumatic tire 2, and the adjacent one of the elastic rings 5 of the run-flat support body 3 at multiple points on the circumference of the bead part 2a and the elastic ring 5. The extending part 1b allows these clamp parts 1a to extend radially outward of the pneumatic tire 2. In addition, the extending part 1b has branching frames and is provided, in the middle of each of the branching frames, with an extending mechanism 1c for allowing the frame to extend. The extending mechanism is not particularly limited as long as being capable of allowing the frame to extend radially outward of the pneumatic tire. For example, as the extending mechanism, a structure in which the frame is slid radially outward and screwed can be used as well as a turnbuckle, a spring and a latch.

By coaxially holding the pneumatic tire 2 before the pneumatic tire 2 is fitted to the rim, and the run-flat support body 3 with the above-described fixing device 1, the run-flat support body 3 with the above-described fixing device 1, the run-flat support body 3 inserted into the hollow part can be securely prevented from moving in any radial direction, and thus from contacting the inner surface of the pneumatic tire, while the pneumatic tire 2 is being transported. As a result, the layers of the lubricant 6 applied to the inner surface of the tire are prevented from being disarranged through the contacting with the run-flat support body 3, and thus the wheel is prevented from being out of weight balance after the pneumatic tire 2 is fitted to the rim. As a matter of course, the fixing device 1 fitted to the pneumatic tire 2 can be easily removed before the pneumatic tire 2 is fitted to the rim.

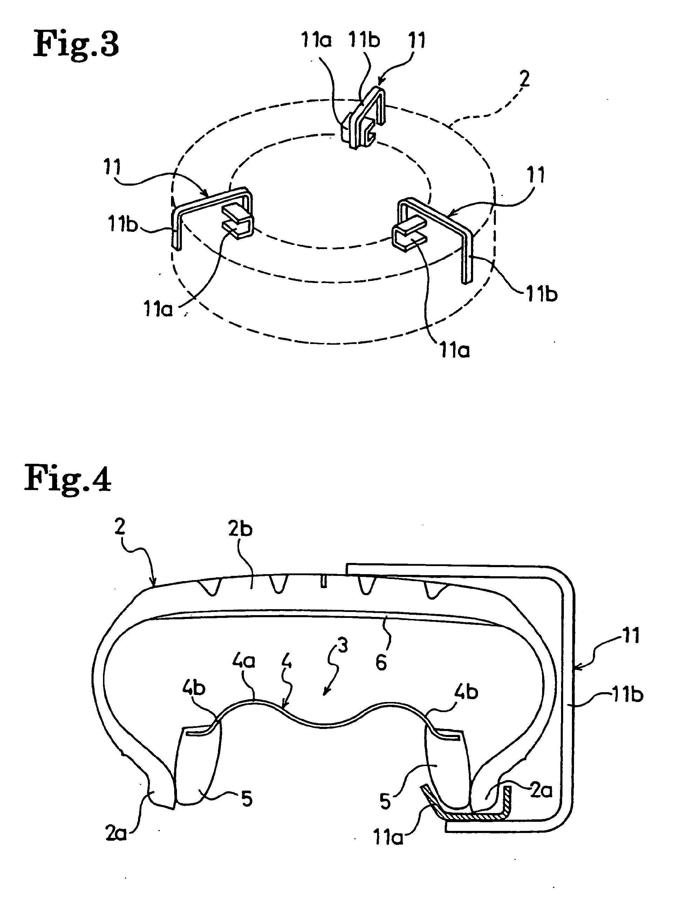

Figs. 3 and 4 show a fixing device for carrying out a method of fixing a run-flat support body to a pneumatic tire according to another exemplary embodiment of the present invention. This embodiment is different from the foregoing embodiment in terms of the structure of the fixing device. Accordingly, the same components as those of the foregoing embodiment are denoted by the same reference numerals, and detailed descriptions for the components will be omitted.

As shown in Figs. 3 and 4, a fixing device 11, for restricting the radial movements of the run-flat support body 3 inserted into the hollow part of the pneumatic tire 2, is fitted to at least one of the bead parts 2a of the pneumatic tire 2 before the pneumatic tire 2 is fitted to the rim. Thus, the pneumatic tire 2 and the run-flat support body 3 are coaxially held by the fixing device 11.

The fixing device 11 includes a clamp part 11a and a locking part 11b. The clamp part 11a clamps together one of the bead parts 2a of the pneumatic tire 2, and the adjacent one of the elastic rings 5 of the run-flat support body 3 at an arbitrary point on the circumference of the bead part 2a and the elastic ring 5. The locking part 11b is locked to a tread part 2b of the pneumatic tire 2 in a manner that the clamp part 11a is pulled up radially outward of the pneumatic tire 2. In this case, multiple fixing devices 11 are provided, and the fixing devices 11 are fitted onto the circumference of the pneumatic tire 2 at substantially equal intervals.

By coaxially holding the pneumatic tire 2 before the pneumatic tire 2 is fitted to the rim, and the run-flat support body 3 with the above-described fixing devices 11, the run-flat support body 3 inserted into the hollow part can be securely prevented from moving in any radial direction, and thus from contacting the inner surface of the pneumatic tire, while the pneumatic tire 2 is being transported. As a result, the layers of the lubricant 6 applied to the inner surface of the tire are prevented from being disarranged through the contacting with the run-flat support body 3, and thus the wheel is prevented from being out of weight balance after the pneumatic tire 2 is fitted to the rim. As a matter of course, the fixing devices 11 fitted to the pneumatic tire 2 can be easily removed before the pneumatic tire 2 is fitted to the rim.

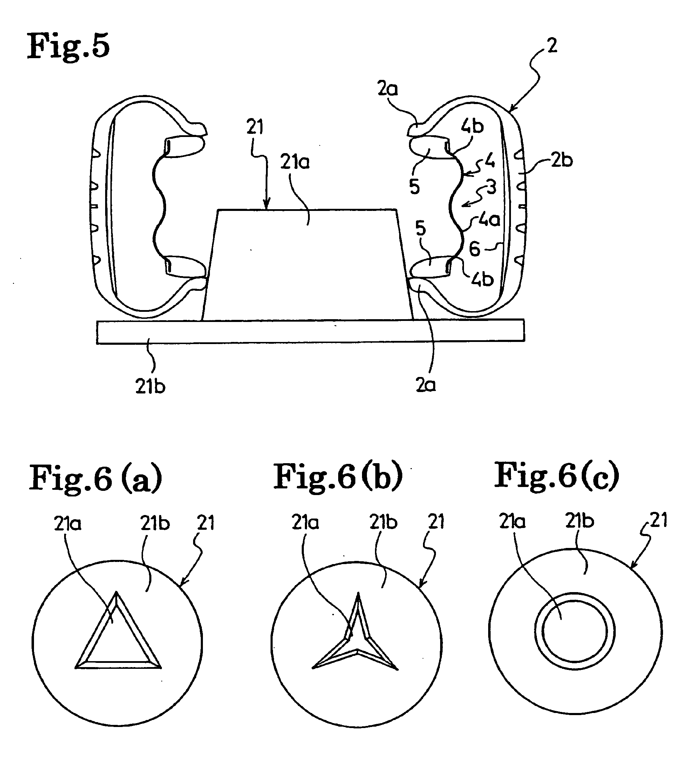

Fig. 5 and Figs. 6 (a) to 6 (c) show a fixing device for carrying out a method of fixing a run-flat support body to a pneumatic tire according to yet another exemplary embodiment of the present invention. This embodiment is different from the foregoing embodiments in terms of the structure of the fixing device. Accordingly, the same components as those of the foregoing embodiments are denoted by the same reference numerals, and detailed descriptions for the components will be omitted.

As shown in Fig. 5, a fixing device 21, for restricting the radial movements of the run-flat support body 3 inserted into the hollow part of the pneumatic tire 2, is fitted to at least one of the bead parts 2a of the pneumatic tire 2 before the pneumatic tire 2 is fitted to the rim. Thus, the pneumatic tire 2 and the run-flat support body 3 are coaxially held by the fixing device 21.

The fixing device 21 includes an insertion part 21a and a flange part 21b. The insertion part 21a is inserted radially inward into one of the bead parts 2a of the pneumatic tire 2, and thus abuts on this bead part 2a and one of the elastic rings 5 of the run-flat support body 3. The flange part 21b is attached to the insertion part 21a. The insertion part 21a preferably has a tapered shape being progressively narrower from the flange part 21b toward the other end. In this case, the fixing device 21 is fixed to the pneumatic tire 2 by pushing the insertion part 21a into the inside of the bead part 2a and allowing the flange part 21b abut on an outer side surface of the pneumatic tire 2.

It should be noted that there is no specific limitation on a plan-view shape of the insertion part 21a viewed from the axial direction of the tire. For example, this plan-view shape of the insertion part 21 can be a triangle as shown in Fig. 6 (a), a quasi-triangle as shown in Fig. 6 (b), or a circle as shown in Fig. 6 (c). To securely fixing the run-flat support body 3 to the pneumatic tire 2, this plan-view shape of the insertion part 21a should preferably be a polygon which has three or more angles (virtually including a circle).

By coaxially holding the pneumatic tire 2 before the pneumatic tire 2 is fitted to the rim, and the run-flat support body 3 with the above-described fixing device 21, the run-flat support body 3 inserted into the hollow part can be securely prevented from moving in any radial direction, and thus from contacting the inner surface of the pneumatic tire, while the pneumatic tire 2 is being transported. As a result, the layers of the lubricant 6 applied to the inner surface of the tire are prevented from being disarranged through the contacting with the run-flat support body 3, and thus the wheel is prevented from being out of weight balance after the pneumatic tire 2 is fitted to the rim. As a matter of course, the fixing device 21 is fitted to the pneumatic tire 2 can be easily removed before the pneumatic tire 2 is fitted to the rim.

The preferred exemplary embodiments of the present invention have been described in detail. It should be understood that various modifications, substitutions and replacements can be applied to the present invention without departing from the scope of the appended claims.

## Claims

1. A method for fixing a run-flat support body (3) and a pneumatic tire (2) to each other, the run-flat support body being configured of a pair of elastic rings (5) to be arranged around a rim, and an annular shell (4) installed across these elastic rings, the pneumatic tire being to be fitted to the rim with the run-flat support body inserted into a hollow part of the tire, the method **characterized in that**
a fixing device (1), for restricting a radial movement of the run-flat support body inserted into the hollow part, is fitted to at least one of bead parts (2a) of the pneumatic tire before the pneumatic tire is fitted to the rim, and
the pneumatic tire and the run-flat support body are coaxially held by the fixing device.

2. A fixing device (1) for fixing a run-flat support body (3) and a pneumatic tire (2) to each other before the tire is fitted to a rim, the run-flat support body being configured of a pair of elastic rings (5) to be arranged around the rim, and an annular shell (4) installed across these elastic rings, the pneumatic tire being to be fitted to the rim with the run-flat support body inserted into a hollow part of the tire, the fixing device comprising:
a plurality of clamp parts (1a) for clamping together one of bead parts (2a) of the pneumatic tire and one of the elastic rings of the run-flat support body at a plurality of points on the circumference of the bead part and the elastic ring; and
an extending part (1b) for allowing the plurality of clamp parts to extend radially outward of the pneumatic tire.

3. A fixing device (1) for fixing a run-flat support body (3) and a pneumatic tire (2) to each other before the tire is fitted to a rim, the run-flat support body being configured of a pair of elastic rings (5) to be arranged around the rim, and an annular shell (4) installed across these elastic rings, the pneumatic tire being to be fitted to the rim with the run-flat support body inserted into a hollow part of the tire, the fixing device comprising:
a clamp part (11a) for clamping together one of bead parts (2a) of the pneumatic tire and one of the elastic rings of the run-flat support body at an arbitrary point on the circumference of the bead part and the elastic ring; and
a locking part (11b) which is locked to a tread part (2b) of the pneumatic tire in a manner that the clamp part is pulled up radially outward of the pneumatic tire.

4. A fixing device (21) for fixing a run-flat support body (3) and a pneumatic tire (2) to each other before the tire is fitted to a rim, the run-flat support body being configured of a pair of elastic rings (5) to be arranged around the rim, and an annular shell (4) installed across these elastic rings, the pneumatic tire being to be fitted to the rim with the run-flat support body inserted into a hollow part of the tire, the fixing device comprising:
an insertion part (21a) which is inserted radially inward into one of bead parts of the pneumatic tire, and which thus abuts on this bead part and one of the elastic rings of the run-flat support body; and
a flange part (21b) attached to the insertion part.

## Patentansprüche

1. Verfahren zum Befestigen eines Leerlauffahrt-Abstützkörpers (3) und eines Luftreifens (2) aneinander, wobei der Leerlauffahrt-Abstützkörper durch ein Paar elastischer Ringe (5), die um eine Felge herum anzuordnen sind, und eine ringförmige Hülle (4), die zwischen diesen elastischen Ringen eingebaut ist, konfiguriert ist, wobei der Luftreifen an der Felge mit dem Leerlauffahrt-Abstützkörper in einen hohlen Teil des Reifens eingesetzt anzubringen ist, das Verfahren **dadurch gekennzeichnet ist, dass**
eine Befestigungseinrichtung (1) zum Einschränken einer radialen Bewegung des Leerlauffahrt-Abstützkörpers, der in den hohlen Teil eingesetzt ist, an wenigstens einem der Wulstteile (2a) des Luftreifens angebracht wird, bevor der Luftreifen an der Felge angebracht wird, und
der Luftreifen und der Leerlauffahrt-Abstützkörper durch die Befestigungseinrichtung koaxial gehalten werden.

2. Befestigungseinrichtung (1) zum Befestigen eines Leerlauffahrt-Abstützkörpers (3) und eines Luftreifens (2) aneinander, bevor der Reifen an einer Felge angebracht wird, wobei der Leerlauffahrt-Abstützkörper aus einem Paar elastischer Ringe (5), die um die Felge herum anzuordnen sind, und einer ringförmigen Hülle (4), die zwischen diesen elastischen Ringen eingebaut ist, konfiguriert ist, wobei der Luftreifen an der Felge mit dem Leerlauffahrt-Abstützkörper in einen hohlen Teil des Reifens eingesetzt anzubringen ist, die Befestigungseinrichtung mit:
mehreren Klemmteilen (1a) zum Zusammenklemmen von einem der Wulstteile (2a) des Luftreifens und von einem der elastischen Ringe des Leerlauffahrt-Abstützkörpers an mehreren Punkten auf dem Umfang des Wulstteils und des elastischen Rings und
einem Ausdehnungsteil (1b), um es den mehreren Klemmteilen zu ermöglichen, sich radial nach außerhalb des Luftreifens zu erstrecken.

3. Befestigungseinrichtung (1) zum Befestigen eines Leerlauffahrt-Abstützkörpers (3) und eines Luftreifens (2) aneinander, bevor der Reifen an einer Felge angebracht wird, wobei der Leerlauffahrt-Abstützkörper aus einem Paar elastischer Ringe (5), die um die Felge herum anzuordnen sind, und einer ringförmigen Hülle (4) konfiguriert ist, die zwischen diesen elastischen Ringen eingebaut ist, wobei der Luftreifen an der Felge mit dem Leerlauffahrt-Abstützkörper in einen hohlen Teil des Reifens eingesetzt anzubringen ist, die Befestigungseinrichtung mit:
einem Klemmteil (11a) zum Zusammenklemmen von einem der Wulstteile (2a) des Luftreifens und einem der elastischen Ringe des Leerlauffahrt-Abstützkörpers an einem beliebigen Punkt auf dem Umfang des Wulstteils und des elastischen Rings, und
einem Arretierteil (11b), welches mit einem Laufflächenteil (2b) des Luftreifens so arretiert wird, dass das Klemmteil radial außerhalb des Luftreifens hochgezogen wird.

4. Befestigungseinrichtung (21) zum Befestigen eines Leerlauffahrt-Abstützkörpers (3) und eines Luftreifens (2) aneinander, bevor der Reifen an einer Felge angebracht wird, wobei der Leerlauffahrt-Abstützkörper aus einem Paar elastischer Ringe (5), die um die Felge herum anzuordnen sind, und einer ringförmigen Hülle (4) konfiguriert ist, die zwischen diesen elastischen Ringen eingebaut ist, wobei der Luftreifen an der Felge mit dem Leerlauffahrt-Abstützkörper in einen hohlen Teil des Reifens eingesetzt anzubringen ist, die Befestigungseinrichtung mit:
einem Einsetzteil (2a), welches radial innerhalb in einen der Wulstteile des Luftreifens eingesetzt ist und welches daher an diesem Wulstteil und einem der elastischen Ringe des Leerlauffahrt-Abstützkörpers anliegt und
einem Flanschteil (21b), das an den Einsetzteil angefügt ist.

## Revendications

1. Procédé de fixation d'un corps de support à flancs renforcés (3) et d'un bandage pneumatique (2) l'un à l'autre, le corps de support à flancs renforcés étant configuré par une paire d'anneaux élastiques (5) à agencer autour d'une jante, et une coque annulaire (4) installée sur ses anneaux élastiques, le bandage pneumatique devant être ajusté à la jante avec le corps de support à flancs renforcés inséré dans une partie creuse du bandage, le procédé étant **caractérisé en ce**
**qu'**un dispositif de fixation (1), pour restreindre un mouvement radial du corps de support à flancs renforcés inséré dans la partie creuse, est ajusté sur au moins une des parties de talon (2a) du bandage pneumatique avant que le bandage pneumatique ne soit monté sur la jante, et
le bandage pneumatique et le corps de support à flancs renforcés sont retenus coaxialement par le dispositif de fixation.

2. Dispositif de fixation (1) pour fixer un corps de support à flancs renforcés (3) et un bandage pneumatique (2) l'un à l'autre avant que le bandage ne soit monté sur une jante, le corps de support à flancs renforcés étant configuré par une paire d'anneaux élastiques (5) à agencer autour de la jante, et une coque annulaire (4) installée sur ces anneaux élastiques, le bandage pneumatique devant être monté sur la jante avec le corps de support à flancs renforcés inséré dans une partie creuse du bandage, le dispositif de fixation comprenant:
une pluralité de parties de serrage (1a) pour serrer ensemble une des parties de talon (2a) du bandage pneumatique et un des anneaux élastiques du corps de support à flancs renforcés à une pluralité de points sur la circonférence de la partie de talon et de l'anneau élastique; et
une partie d'extension (1b) pour permettre à la pluralité de parties de serrage de s'étendre radialement vers l'extérieur du bandage pneumatique.

3. Dispositif de fixation (1) pour fixer un corps de support à flancs renforcés (3) et un bandage pneumatique (2) l'un à l'autre avant que le bandage ne soit monté sur une jante, le corps de support à flancs renforcés étant configuré par une paire d'anneaux élastiques (5) à agencer autour de la jante, et une coque annulaire (4) installée sur ces anneaux élastiques, le bandage pneumatique devant être monté sur la jante avec le corps de support à flancs renforcés inséré dans une partie creuse du bandage, le dispositif de fixation comprenant:
une partie de serrage (11a) pour serrer ensemble une des parties de talon (2a) du bandage pneumatique et un des anneaux élastiques du corps de support à flancs renforcés à un point arbitraire sur la circonférence de la partie de talon et de l'anneau élastique; et
une partie de verrouillage (11b) qui est verrouillée à une partie de bande de roulement (2b) du bandage pneumatique de telle manière que la partie de serrage est tirée radialement vers l'extérieur du bandage pneumatique.

4. Dispositif de fixation (21) pour fixer un corps de support à flancs renforcés (3) et un bandage pneumatique (2) l'un à l'autre avant que le bandage ne soit monté sur une jante, le corps de support à flancs renforcés étant configuré par une paire d'anneaux élastiques (5) à agencer autour de la jante, et une coque annulaire (4) installée sur ces anneaux élastiques, le bandage pneumatique devant être monté sur la jante avec le corps de support à flancs renforcés inséré dans une partie creuse du bandage, le dispositif de fixation comprenant:
une partie d'insertion (21a) qui est insérée radialement vers l'intérieur dans une des parties de talon du bandage pneumatique, et qui bute ainsi contre cette partie de talon et un des anneaux élastiques du corps de support à flancs renforcés; et
une partie de bride (21b) fixée à la partie d'insertion.
